# EUROPEAN PATENT SPECIFICATION

(11) **EP 0 823 032 B1**
(45) Date of publication and mention of the grant of the patent: **16.12.1998**
(21) Application number: 96910173.2
(22) Date of filing: 12.04.1996
(51) Int. Cl.: F16L 27/08, F16L 47/04, F23J 13/04

(54) **METALLIC PIPE ELEMENT FOR A FLUE**
METALLROHRELEMENT FÜR EIN ABZUGSROHR
ELEMENT METALLIQUE POUR TUYAU D'EVACUATION DE FUMEE

(30) Priority: 21.04.1995 IT VR950024 U
(43) Date of publication of application: 11.02.1998
(73) Proprietor: Meniflex S.R.L., 37050 S. Maria Di Zevio (IT)
(72) Inventor: Zamboni, Elio, I-37050 S. Maria Di Zevio (IT)
(74) Representative: Petraz, Gilberto Luigi
(86) International application number: IT9600070
(87) International publication number: WO9633364

(56) References cited:
- EP-A- 0 443 223
- EP-A- 0 522 410
- DE-A- 2 856 520
- US-A- 4 822 080

## Description

### TECHNICAL FIELD

The present invention relates to a metallic pipe element for a flue.

More particularly, the present invention relates to a metallic pipe element for flue which may easily be coupled to another conjugated pipe element, and which warrants a very good junction seal between said pipe elements.

The invention may be mainly applied in the field of prefabricated building.

### BACKGROUND ART

Several different flues are known, which are formed by a plurality of superposed elements coupled by a mutual insertion of their ends, a connection strip being normally provided in the connection area between two adjacent elements in order to keep a good mechanical seal and to prevent the outlet of smoke from the connection area.

For instance, document EP-A-522 410 discloses the connection of two adjacent elements by means of a locking nut and inclined ribs.

The flue pipe elements which are normally used involve a plurality of disadvantages and drawbacks, which are mainly due to undeniable difficulties for assemblying the flue.

In fact, the pipe elements known in the art have the same diameter at both ends, and this causes a big trouble during the insertion of a pipe end into the end portion of another identical element.

Furthermore, said elements are kept together by means of a metallic strip which, since the contact surfaces of both pipe elements are completely smooth, needs to have a remarkable width, in order to have a suitable contact surface with the interconnected pipe elements.

Finally, the seal doesn't result to be very good from the mechanical point of view and taking into consideration a possible outlet of smoke from the connecting area between the various pipe elements.

A further technical embodiment belonging to the state of the art is disclosed in EP-A-443 223 and it concerns a flue metallic pipe element characterized by having first and second means which are able to provide for a suitable joining of adjacent pipes. In such a form of embodiment the connection between two adjacent pipes is obtained by the insertion of a specific pin element in a predefined guide carrying out a limited rotation on the horizontal plane with the aim to simply obtain a latch.

### DESCRIPTION OF THE INVENTION

The present invention aims to obviate the disadvantages and drawbacks which are typical of the background art, and to provide, thus, for a pipe element for a flue, which may be coupled to another similar element in an extremely quick way by an operator, and which simultaneously guarantees a perfect coupling of the pipe elements joined by their respective ends.

This is achieved by means of a pipe element for flue having the features disclosed in the main claim.

The dependent claim outlines an advantageous form of embodiment of the invention.

This conformation allows a pair of pipe elements to be easily joined together, since the diameter of the pipe body is smaller than the diameter of the end area of the adjacent pipe.

According to the invention, the edge of the metallic pipe end having a larger diameter is internally folded, and it is provided with a series of radial cuts which allow said end to be folded.

Furthermore each portion which is comprised between two radial cuts is on one hand folded in such a way as to be parallel to the pipe longitudinal axis, on the other hand folded in such a way as to perpendicular to said axis.

In this way a metallic locking nut is formed inside of the pipe, in the larger diameter area.

The other pipe is provided, by means of a mould, with a series of ribs which are adjacent to each other and which form a thread suitable for cooperating with said locking nut in order to join together a pair of adjacent pipes.

The joining operation is carried out in a very simple way, by inserting one end of a pipe into the conjugated end of an adjacent pipe and by carrying out a rotation about the pipe axis until the respective locking nut and thread elements reach an abutment position.

According to the invention, a sealing gasket is previously inserted into the larger diameter pipe area, close to the locking nut.

Said gasket, in operation, warrants a total seal against any possible outlet of smoke.

In this way the purposes of the invention are achieved, since both a merely mechanical seal of the joint, and a seal against a possible outlet of smoke are assured.

### ILLUSTRATION OF DRAWINGS

Other features and advantages of the invention will become apparent by reading the following description of a form of embodiment of the invention, given as a non-limiting example, with the help of the figures illustrated in the attached drawings, in which:
- fig.1 is a schematical side view of a pipe for flue according to the invention;
- fig. 2 is a schematical perspective view of the pipe of fig.1;
- fig. 3 is a schematical perspective view of the joint of a pair of adjacent pipes according to the invention.

### DESCRIPTION OF A FORM OF EMBODIMENT

In the figures, reference sign 10 generally indicates a metallic pipe for flue according to the invention.

Pipe 10, which may have any diameter, according to the requirements, comprises a first end 11 having an area whose diameter is slightly larger than the diameter of pipe 10.

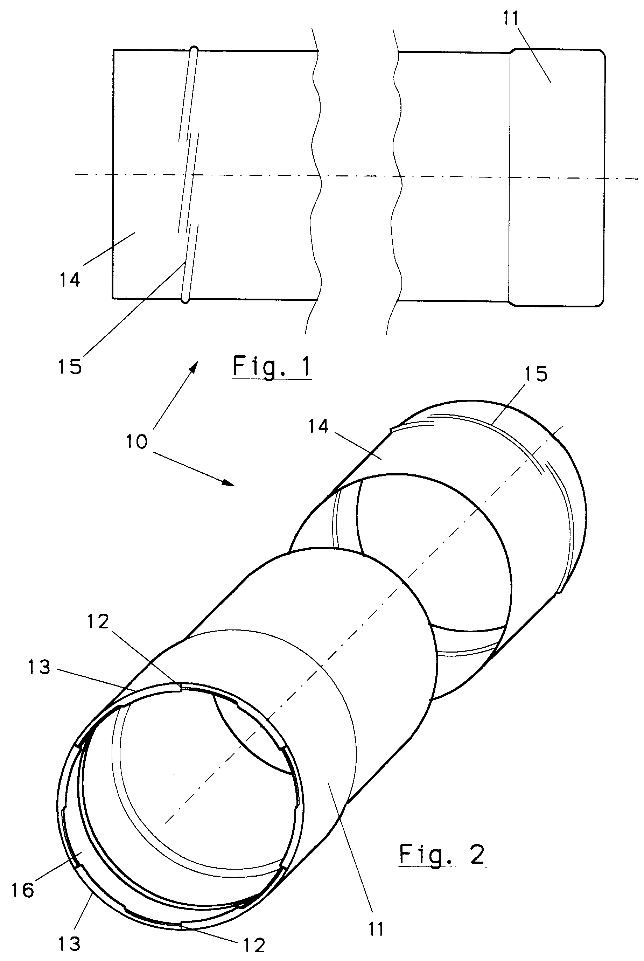

As it may be noted in fig.2, in correspondence of said first end the edge 11 of pipe 10 is folded towards the inner part of the pipe.

The edge is folded by carrying out on the edge a series of cuts 12 and, thereafter, by folding inwardly the tabs 13 comprised between two adjacent cuts 12.

Furthermore, concerning each tab 13, a portion of the latter is completely folded against the inner wall of pipe 10, while another portion is only partially folded and it is substantially perpendicular to the inner wall of pipe 10.

The series of tabs 13, which are folded in this way, forms a locking nut for a second adjacent pipe having some features which will be later described in detail.

Pipe 10 has a second end 14, close to which is formed, by means of a suitable mould, a series of ribs 15, forming a thread suitable for cooperating with the locking nut as described above.

The flue element according to the invention is completed by a sealing gasket 16 made of a heat resistant resilient material, which is placed closed to the locking nut, within the enlarged diameter pipe portion.

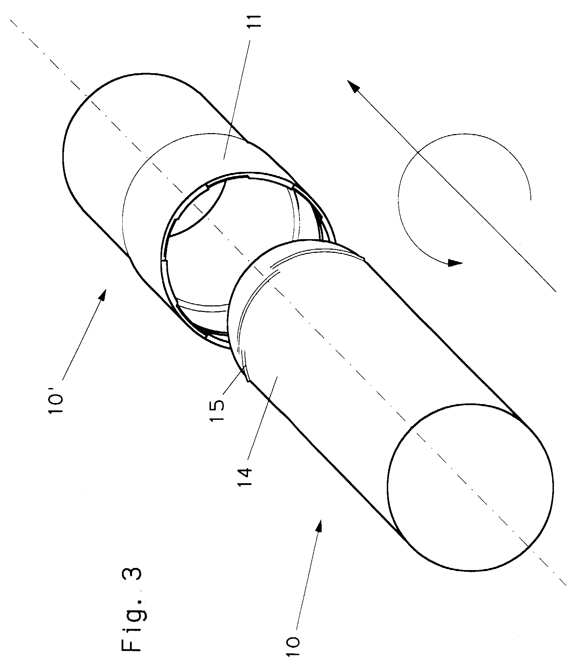

Referring to fig.3, it may be noted that the operation for joining togheter two adjacent flue elements is very simple.

In fact, in order to carry out this operation it will suffice to insert an end 14 of a pipe 10 into the conjugated end 11 having a larger diameter of an adjacent pipe 10', and to successively rotate a pipe (or both, in opposed directions in respect to each other).

Ribs 15 of pipe 10 are inserted into the locking nut of pipe 10' and, according to the number of ribs and tabs which respectively define the thread and the locking nut, a perfect joint of both pipes is obtained by a rotation of a fraction of revolution, e.g. by a rotation of one sixth revolution, i.e. a rotation of 60°.

During this operation the sealing gasket is held between the external wall of pipe 10 and the inner wall of the enlarged diameter area of pipe 10', and it carries out its functions against a possible outcome of smoke from the joint area.

The invention has previously been described with reference to an advantageous form of embodiment of the same.

However it is clear that the invention includes several variants, within the scope of mechanical equivalences.

## Claims

1. Metallic pipe element (10) for flue, comprising a substantially cylindrical pipe body having a predetermined diameter, one of the ends of said element (10) being formed by a portion (11) having a diameter larger than said predetermined diameter, said portion (11) being provided with first means (13) for rotatably coupling said end to the other end (14) of another metallic pipe element (10'), said other end (14) being provided with second coupling means (15) suitable for cooperating, in operation, with said first means (13) characterized in that said first joining means are constituted by a locking nut formed inside of said portion (11) having a larger diameter, said locking nut being obtained by folding inwardly the edge of said portion (11), said fold being subdivided into a plurality of tabs (13) separated from each other by cuts (12), each tab having a first part which is perpendicular to the inner wall of element (10) and a second part which is parallel to said inner wall, and that said second means are constituted by a series of inclined ribs (15) forming a thread suitable for cooperating with said locking nut, whereby two adjacent pipes are joined to each other by mutually rotating them by a fraction of a revolution.

2. Element (10) according to claim 1, characterized in that it comprises a sealing gasket made of heat-resistant material and which is placed in said portion (11) having a larger diameter.

## Patentansprüche

1. Metallrohrelement (10) für ein Abzugsrohr, das ein im wesentlichen zylinderförmiges Rohr mit einem vorbestimmten Durchmesser umfaßt, wobei eines der Enden dieses Elements (10) einen Teil (11) mit einem größeren Durchmesser als der vorbestimmte Durchmesser umfaßt, wobei dieser Teil (11) mit ersten Mitteln (13) zur Verbindung durch Drehung dieses Endes mit dem anderen Ende (14) eines anderen Elementes (10') eines anderen Metallrohrs ausgestattet ist, wobei das andere Ende (14) mit zweiten Verbindungsmitteln (15) ausgestattet ist, die mit den ersten Mitteln (13) zusammenwirken, dadurch gekennzeichnet, daß diese ersten Verbindungsmittel aus einer Nutmutter bestehen, die innerhalb dieses ersten Teils (11) mit dem größeren Durchmesser geformt ist, wobei diese Nutmutter durch Biegen des Randes dieses Teils (11) nach innen erzielt wird, wobei diese Biegung in eine Vielzahl von durch Einschnitte (12) voneinander getrennte Laschen (13) unterteilt ist, wobei jede einzelne Lasche einen ersten zur Innenwand des Elements (10) senkrechten Teil und einen zweiten parallelen Teil zu dieser Innenwand aufweist, und dadurch, daß diese zweiten Mittel aus einer Reihe schräger Rillen (15) bestehen, die ein Gewinde bilden, das mit dieser Nutmutter zusammenwirkt, wobei zwei aneinandergrenzende Röhre sich miteinander durch den Bruchteil einer gegenseitigen Drehung verbinden.

2. Element (10) nach Anspruch 1, dadurch gekennzeichnet, daß es einen Dichtungsring aus hitzebeständigem Material umfaßt, der sich in dem Teil (11) mit größerem Durchmesser befindet.

## Revendications

1. Elément (10) métallique pour tuyau d'évacuation de fumée, comportant un corps de tuyau essentiellement cylindrique ayant un diamètre prédéterminé, l'une des extrémités dudit élément (10) étant formée par une portion (11) ayant un diamètre plus grand par rapport audit diamètre prédéterminé, ladite portion (11) étant munie de premiers moyens (13) de jonction à rotation de ladite extrémité avec l'autre extrémité (14) d'un autre élément métallique pour tuyau, ladite autre extrémité (14) étant munie de deuxièmes moyens (15) de jonction pouvant coopérer, en oeuvre, avec lesdits premiers moyens (13), caractérisé en ce que lesdits premiers moyens de jonction sont constitués par un embout situé à l'intérieur de ladite portion (11) ayant un diamètre supérieur, ledit embout étant obtenu en repliant vers l'intérieur le bord de ladite portion (11), le pli étant subdivisé en une pluralité de languettes (13) séparées l'une par rapport à l'autre par des entailles (12), chaque languette ayant une première partie perpendiculaire à la paroi intérne de l'élément (10) ainsi qu'une deuxième partie parallèle à ladite paroi intérne, et en ce que lesdits deuxièmes moyens sont constitués par une série de nervures (15) inclinées formant un taraudage povant coopérer avec ledit embout, de sorte que deux éléments adjacents sont couplés l'un à l'autre au moyen d'une rotation mutuelle desdits éléments pour une fraction de tour.

2. Elément (10) selon la revendication 1, caractérisé en ce qu'il comporte un joint d'étanchéité en matériau thérmorésistant, disposé dans ladite portion (11) ayant un diamètre supérieur.
